# FASCICULE DE BREVET EUROPEEN

(11) **EP 3 156 278 B1**
(45) Date de publication et mention de la délivrance du brevet: **30.06.2021**
(21) Numéro de dépôt: 16194251.1
(22) Date de dépôt: 17.10.2016
(51) Int. Cl.: B60K 35/00, B60R 1/00, B60R 1/12

(54) **PROCÉDÉ DE GESTION DE L'AFFICHAGE D'AU MOINS UN RÉTROVISEUR ÉCRAN D'UN VÉHICULE AUTOMOBILE**
VERFAHREN ZUR VERWALTUNG EINER ANZEIGE VON MINDESTENS EINEM RÜCKSPIEGELBILDSCHIRM EINES KRAFTFAHRZEUGS
METHOD FOR MANAGING THE DISPLAY OF AT LEAST ONE REAR-VIEW SCREEN OF A MOTOR VEHICLE

(30) Priorité: 16.10.2015 FR 1559849
(43) Date de publication de la demande: 19.04.2017
(73) Titulaire: DAV, 94046 Créteil Cedex (FR)
(72) Inventeur: VANHELLE, Stéphane, 94046 Créteil CEDEX (FR)
(74) Mandataire: Delplanque, Arnaud

(56) Documents cités:
- WO-A1-2010/149184
- US-A1- 2002 184 236
- US-A1- 2011 082 616
- US-A1- 2012 050 024
- US-A1- 2014 266 664

## Description

La présente invention concerne un procédé de gestion de l'affichage d'au moins un rétroviseur écran d'un véhicule automobile.

Une tendance actuelle dans les véhicules automobiles consiste à intégrer de plus en plus d'écrans dans l'habitacle, par exemple pour l'affichage du plan de navigation, des informations des systèmes embarqués du véhicule ou pour l'affichage d'écrans rétroviseurs permettant une rétrovision latérale arrière ou pour l'affichage de la caméra de recul.

Le remplacement des rétroviseurs classiques par deux caméras extérieures agencées de part et d'autre du véhicule automobile et un ou plusieurs écrans pour afficher les visions latérales arrière est une évolution déjà intégrée sur certains véhicules automobiles. Ces rétroviseurs écrans permettent de réduire l'impact CO₂ par leur agencement dans l'habitacle qui réduit la prise au vent du véhicule, permettant ainsi la baisse de consommation de carburant.

Un procédé de gestion de l'affichage d'au moins un rétroviseur écran d'un véhicule automobile est connu du document WO2010/149184 A1.

Cependant, l'augmentation sensible du nombre d'écrans d'affichage dans l'habitacle peut constituer une source de surcharge visuelle pour le conducteur. Cette surcharge visuelle peut augmenter la fatigue du conducteur ou baisser sa vigilance, gênant sa conduite.

Un but de la présente invention est de proposer un procédé de gestion de l'affichage d'au moins un rétroviseur écran de véhicule automobile permettant d'optimiser l'utilisation des rétroviseurs écrans.

Pour cela, la présente invention a pour objet un procédé de gestion de l'affichage d'au moins un rétroviseur écran d'un selon la revendication 1.

La surveillance d'au moins un paramètre de conduite du véhicule automobile permet de limiter l'augmentation de la charge visuelle du conducteur aux situations de conduite nécessitant leur utilisation, c'est-à-dire lorsque l'utilisateur a besoin de visualiser l'environnement du véhicule, l'intensité d'éclairage des rétroviseurs écrans étant atténuée la majeure partie du temps. On évite ainsi la fatigue visuelle du conducteur grâce à la modulation de l'intensité d'affichage, celle-ci pouvant être déclenchée de manière passive, sans intervention volontaire du conducteur. Cette optimisation de l'éclairage des rétroviseurs écrans permet par ailleurs de réduire la consommation d'énergie et d'augmenter la durée de vie des écrans qui sont moins sollicités.

Selon une ou plusieurs caractéristiques du procédé de gestion de l'affichage, prise seule ou en combinaison,
- un paramètre de conduite surveillé est l'utilisation d'un frein du véhicule automobile, le mode d'éclairage fort étant activé par détection d'un contact ou de l'actionnement de la pédale de frein du véhicule automobile,
- un paramètre de conduite surveillé est l'allure du véhicule automobile, le mode d'éclairage fort étant activé lorsque la décélération du véhicule automobile franchit un premier seuil de décélération prédéterminé,
- un paramètre de conduite surveillé est l'utilisation de la marche arrière du véhicule automobile, le mode d'éclairage fort étant activé par détection de l'enclenchement de la marche arrière,
- un paramètre de conduite surveillé est la présence d'un objet ou d'une personne dans le champ de détection d'au moins un radar ou capteur ultrason du véhicule automobile, ledit mode d'éclairage fort étant activé lorsqu'un objet ou une personne est détecté dans ledit champ de détection,
- un paramètre de conduite surveillé est la présence d'un objet ou d'une personne dans un angle mort du véhicule automobile, ledit mode d'éclairage fort étant activé lorsqu'un objet ou une personne est détecté dans un angle mort,
- un paramètre de conduite surveillé est l'émission d'un signal alerte anticollision par un système anticollision du véhicule automobile, ledit mode d'éclairage fort étant activé lorsqu'un signal alerte anticollision est émis,
- un paramètre de conduite surveillé est l'orientation de la tête du conducteur, ledit mode d'éclairage fort étant activé lorsqu'on détecte que le conducteur a tourné la tête sur un côté pendant une durée supérieure à une durée prédéterminée,
- un paramètre de conduite surveillé est l'utilisation des clignotants du véhicule automobile, ledit mode d'éclairage fort étant activé lorsqu'un clignotant est actionné,
- un paramètre de conduite surveillé est le franchissement d'une ligne de marquage au sol, ledit mode d'éclairage fort étant activé lorsqu'un capteur du véhicule automobile détecte le franchissement d'une ligne de marquage au sol,
- en mode d'éclairage fort, seule l'intensité d'affichage du rétroviseur écran permettant de visualiser le côté vers lequel la tête du conducteur s'est orientée ou le côté indiqué par le clignotant ou le côté de franchissement de la ligne de marquage au sol ou le côté où un objet ou une personne est détecté, est augmenté,
- en mode d'éclairage fort, l'intensité d'affichage des deux rétroviseurs écrans, est augmentée,
- on augmente l'intensité d'affichage d'au moins un rétroviseur écran à un premier niveau haut en mode d'éclairage fort, lorsque ledit paramètre de conduite franchit un premier seuil prédéterminé et on augmente l'intensité d'affichage du rétroviseur écran à un deuxième niveau haut supérieur au premier niveau haut en mode d'éclairage très fort, lorsque ledit paramètre de conduite franchit un deuxième seuil prédéterminé,
- le mode d'éclairage fort est activé au moins pendant une durée prédéterminée,
- on diminue le nombre de paramètres de conduite dont la surveillance est apte à augmenter l'intensité d'affichage d'au moins un rétroviseur écran lorsque le véhicule automobile est en mode de conduite autonome.

D'autres caractéristiques et avantages de l'invention ressortiront de la description suivante, donnée à titre d'exemple et sans caractère limitatif, en regard des figures annexées sur lesquelles :
- La figure 1 représente une vue schématique d'un véhicule automobile, et
- La figure 2 représente de manière schématique les étapes d'un procédé de gestion de l'affichage.

Sur ces figures, les éléments identiques portent les mêmes numéros de référence. Les réalisations suivantes sont des exemples.

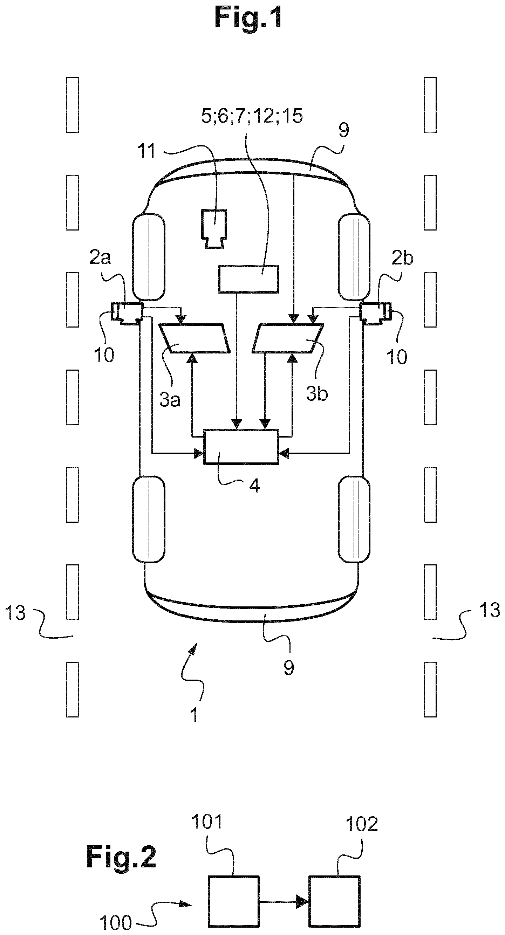

Le véhicule automobile 1 représenté sur la figure 1 comporte au moins une caméra, par exemple une caméra droite 2b et une caméra gauche 2a agencées de part et d'autre du véhicule automobile 1 pour la prise de vues de l'arrière droit et gauche du véhicule automobile 1.

Le véhicule automobile 1 comporte en outre au moins un rétroviseur écran, tel qu'un rétroviseur écran gauche 3a et un rétroviseur écran droit 3b agencés dans l'habitacle, par exemple dans le tableau de bord ou sur des montants du véhicule automobile 1. Le rétroviseur écran droit 3b est relié à la caméra droite 2b pour permettre au conducteur de visualiser l'arrière droit du véhicule 1. De même, le rétroviseur écran gauche 3a est relié à la caméra gauche 2a pour permettre la visualisation de l'arrière gauche du véhicule 1. On prévoit notamment que le rétroviseur droit 3b soit agencé à droite, devant le passager et que le rétroviseur gauche 3a soit agencé à gauche, face au conducteur. Les rétroviseurs écrans 3a, 3b sont par exemple des écrans à cristaux liquides, communément appelé écran TFT-LCD (pour « Thin-Film Transistor Liquid Crystal Display » en anglais).

A la mise en marche du véhicule 1, on surveille au moins un paramètre de conduite du véhicule 1 (étape 101 du procédé de gestion de l'affichage d'au moins un rétroviseur écran 100 sur la figure 2) et on augmente l'intensité d'affichage d'au moins un rétroviseur écran 3a, 3b dans un mode d'éclairage fort, en relation avec l'évolution du paramètre de conduite (étape 102), c'est-à-dire lorsque le paramètre de conduite franchit un premier seuil prédéterminé ou change d'état.

En dehors du mode d'éclairage fort, lorsque le mode d'éclairage fort est inactif, avant et après l'activation du mode d'éclairage fort, l'intensité d'affichage du rétroviseur écran 3a, 3b est réduite à un niveau bas dans un mode d'éclairage atténué.

Le mode d'éclairage atténué est un mode par défaut, correspondant d'une part, à la situation d'arrêt du véhicule automobile 1 et d'autre part, à la situation où le véhicule automobile 1 roule et que les paramètres de conduite surveillés sont à l'état inactif ou n'ont pas franchi de seuil prédéterminé.

En partant du mode d'éclairage atténué, on augmente l'intensité d'affichage d'au moins un rétroviseur écran 3a, 3b à un premier niveau haut en mode d'éclairage fort, lorsqu'un paramètre de conduite franchit un premier seuil prédéterminé. Le passage du niveau bas du mode d'éclairage atténué au niveau haut du mode d'éclairage fort, peut être linéaire, échelonné ou autre. On peut prévoir aussi d'augmenter l'intensité d'affichage du rétroviseur écran 3a, 3b à un deuxième niveau haut, supérieur au premier niveau haut, en mode d'éclairage très fort, lorsque ledit paramètre de conduite franchit un deuxième seuil prédéterminé.

Pour cela, le véhicule automobile 1 comporte par exemple une unité de contrôle 4 reliée à des capteurs du véhicule 1 et aux rétroviseurs écran 3a, 3b.

Un premier paramètre de conduite surveillé peut être l'utilisation du frein du véhicule automobile 1. Le mode d'éclairage fort dans lequel on augmente l'intensité d'affichage d'au moins un rétroviseur écran 3a, 3b peut être activé par détection d'un contact ou de l'actionnement de la pédale de frein du véhicule automobile 1. Ainsi, le véhicule 1 peut comporter un capteur 5 de contact de la pédale de frein ou un capteur d'actionnement de la pédale de frein, dont le signal de sortie est envoyé à l'unité de contrôle 4.

En mode d'éclairage fort, l'intensité d'affichage des rétroviseurs écrans droite 3b et gauche 3a, peut être augmentée.

On peut également prévoir un mode d'éclairage très fort dans lequel on mesure le niveau d'enfoncement de la pédale de frein et on augmente encore l'intensité d'affichage d'au moins un rétroviseur écran 3a, 3b par rapport au mode d'éclairage fort, lorsque le niveau d'enfoncement de la pédale de frein franchit un deuxième seuil prédéterminé supérieur à un premier seuil prédéterminé.

Le mode d'éclairage fort (et le mode d'éclairage très fort le cas échéant), est activé tant que le conducteur appuie sur la pédale de frein et au moins pendant une durée prédéterminée après que le conducteur l'ait relâchée.

Un deuxième paramètre de conduite surveillé peut être l'allure du véhicule automobile 1. Le mode d'éclairage fort dans lequel on augmente l'intensité d'affichage d'au moins un rétroviseur écran 3a, 3b peut être activé lorsque la décélération du véhicule automobile 1 franchit un premier seuil de décélération prédéterminé. Ainsi, le signal de sortie du capteur de vitesse 6 du véhicule automobile 1 peut être envoyé à l'unité de contrôle 4 qui le compare avec le premier seuil de décélération prédéterminé.

En mode d'éclairage fort, l'intensité d'affichage des rétroviseurs écrans droite 3b et gauche 3a, peut être augmentée.

On peut également prévoir un mode d'éclairage très fort, dans lequel on augmente encore l'intensité d'affichage d'au moins un rétroviseur écran 3a, 3b par rapport au mode d'éclairage fort, lorsque la décélération du véhicule automobile 1 franchit un deuxième seuil prédéterminé de décélération, supérieur au premier seuil prédéterminé de décélération.

Le mode d'éclairage fort (et le mode d'éclairage très fort le cas échéant), est activé tant que la décélération dépasse le premier (ou le deuxième) seuil prédéterminé de décélération et au moins pendant une durée prédéterminée après que la décélération soit repassée au-dessous du premier seuil prédéterminé.

Un troisième paramètre de conduite surveillé peut être l'utilisation de la marche arrière du véhicule automobile 1. Le mode d'éclairage fort dans lequel on augmente l'intensité d'affichage d'au moins un rétroviseur écran 3a, 3b peut être activé par détection de l'enclenchement de la marche arrière. Ainsi, le signal de sortie de l'enclenchement de la marche arrière de la boite de vitesse 7 du véhicule automobile 1 peut être envoyé à l'unité de contrôle 4.

En mode d'éclairage fort, l'intensité d'affichage des rétroviseurs écrans droite 3b et gauche 3a, peut être augmentée.

Le mode d'éclairage fort est activé tant que la marche arrière est enclenchée et au moins pendant une durée prédéterminée après que le conducteur l'ait relâchée.

Un quatrième paramètre de conduite surveillé peut être la présence d'un objet (autre véhicule en mouvement ou à l'arrêt, mur, poteau...) ou d'une personne (piéton, cycliste..) dans le champ de détection d'au moins un radar ou capteur ultrason 9, 10 du véhicule automobile 1. Le mode d'éclairage fort dans lequel on augmente l'intensité d'affichage d'au moins un rétroviseur écran 3a, 3b peut être activé lorsqu'un objet ou une personne est détecté dans le champ de détection. Ainsi, le signal de sortie du radar ou capteur ultrason 9, 10 est envoyé à l'unité de contrôle 4.

Il peut s'agir des radars ou capteurs ultrasons9, agencés dans le parechoc avant et/ou arrière du véhicule 1 pour l'aide au stationnement.

Il peut aussi s'agir des radars de détection d'angle mort 10 (« Blind Spot Monitor » en anglais). Ces radars 10 permettent de détecter d'autres véhicules localisés sur le côté et l'arrière du conducteur. Dans ce cas, un paramètre de conduite surveillé peut être plus précisément la présence d'un objet ou d'une personne (cycliste..) dans l'angle mort du véhicule automobile 1.

Le paramètre de conduite surveillé peut également être l'émission d'un signal alerte anticollision par un système anticollision du véhicule automobile 1, lorsque celuici en est équipé.

Le système anticollision permet, à l'aide de radars ou capteur ultrasons, agencés par exemple à l'arrière et/ou sur les côtés du véhicule 1, de détecter les objets ou personnes à proximité de la voiture. Si un objet ou une personne se trouve sur la trajectoire du véhicule 1 en marche arrière, un signal alerte anticollision est émis et les freins peuvent être activés automatiquement. Ce système anticollision permet d'éviter les collisions latérales, en marche arrière et aide à maintenir une distance de sécurité.

Le mode d'éclairage fort dans lequel on augmente l'intensité d'affichage d'au moins un rétroviseur écran 3a, 3b peut être activé lorsqu'un signal alerte anticollision est émis par le système anticollision.

On peut également prévoir un mode d'éclairage très fort, dans lequel on augmente encore l'intensité d'affichage d'au moins un rétroviseur écran 3a, 3b par rapport au mode d'éclairage fort, lorsque la distance entre l'objet ou la personne détecté et le véhicule automobile 1 est inférieure à un deuxième seuil prédéterminé, lui-même inférieur à un premier seuil prédéterminé définissant le mode d'éclairage fort.

En mode d'éclairage fort, l'intensité d'affichage des rétroviseurs écrans droite 3b et gauche 3a, peut être augmentée. Alternativement, on peut prévoir qu'en mode d'éclairage fort (ou très fort), seule l'intensité d'affichage du rétroviseur écran 3a, 3b permettant de visualiser le côté où un objet ou une personne est détecté, soit augmentée.

Le mode d'éclairage fort (et le mode d'éclairage très fort le cas échéant), est activé tant que l'objet ou la personne est détecté et au moins pendant une durée prédéterminée après que l'objet ou la personne n'est plus détecté.

Un cinquième paramètre de conduite surveillé est l'orientation de la tête du conducteur. Le mode d'éclairage fort dans lequel on augmente l'intensité d'affichage d'au moins un rétroviseur écran 3a, 3b peut être activé lorsqu'on détecte que le conducteur a tourné la tête sur un côté pendant une durée supérieure à une durée prédéterminée. Ainsi, le véhicule 1 peut comporter par exemple une caméra 11 dans l'habitacle, orientée vers la tête du conducteur et dont le traitement d'images permet de déterminer l'orientation de la tête. Le signal de sortie de la caméra 11 est relié à l'unité de contrôle 4 chargée du traitement d'images.

En mode d'éclairage fort, l'intensité d'affichage des rétroviseurs écrans droite 3b et gauche 3a, peut être augmentée. Alternativement, on peut prévoir qu'en mode d'éclairage fort, seule l'intensité d'affichage du rétroviseur écran 3a, 3b permettant de visualiser le côté vers lequel la tête du conducteur s'est orientée, soit augmentée.

Le mode d'éclairage fort est activé tant que la tête est tournée sur le côté et au moins pendant une durée prédéterminée après que l'utilisateur a replacé la tête dans l'axe de la route.

Un sixième paramètre de conduite surveillé peut être l'utilisation des clignotants 12 du véhicule automobile 1. Le mode d'éclairage fort dans lequel on augmente l'intensité d'affichage d'au moins un rétroviseur écran 3a, 3b peut être activé lorsqu'un clignotant 12 est actionné. Ainsi, le signal de sortie de l'enclenchement des clignotants 12 peut être envoyé à l'unité de contrôle 4.

En mode d'éclairage fort, l'intensité d'affichage des rétroviseurs écrans droite 3b et gauche 3a, peut être augmentée. Alternativement, on peut prévoir qu'en mode d'éclairage fort (ou très fort), seule l'intensité d'affichage du rétroviseur écran 3a, 3b permettant de visualiser le côté indiqué par le clignotant 12, soit augmenté.

Le mode d'éclairage fort (et le mode d'éclairage très fort le cas échéant), est activé tant que le clignotant 12 est enclenché et au moins pendant une durée prédéterminée après qu'il ait été relâché.

Un septième paramètre de conduite surveillé peut être le franchissement par le véhicule automobile 1 d'une ligne de marquage au sol 13, telle qu'une ligne blanche continue ou discontinue. Le mode d'éclairage fort dans lequel on augmente l'intensité d'affichage d'au moins un rétroviseur écran 3a, 3b peut être activé lorsqu'un capteur 15 du véhicule automobile 1 détecte le franchissement d'une ligne de marquage au sol. Le capteur 15 peut être un capteur optique, tel qu'une caméra orientée vers la route ou tel que des capteurs sensibles aux rayonnements infrarouge couplés avec des sources de rayonnement infrarouge montées sous le véhicule (type « AFIL » pour Alerte de franchissement involontaire de ligne), permettant de détecter les lignes de marquage au sol en surveillant les variations de réflexion des rayonnements infrarouges sur la chaussée. Le signal de sortie du capteur 15 est envoyé à l'unité de contrôle 4.

En mode d'éclairage fort, l'intensité d'affichage des rétroviseurs écrans droite 3b et gauche 3a, peut être augmentée. Alternativement, on peut prévoir qu'en mode d'éclairage fort (ou très fort), seule l'intensité d'affichage du rétroviseur écran 3a, 3b permettant de visualiser le côté de franchissement de la ligne de marquage au sol, soit augmenté.

Le mode d'éclairage fort (et le mode d'éclairage très fort le cas échéant), est activé tant que le véhicule franchit une ligne de marquage au sol 13 et au moins pendant une durée prédéterminée après son franchissement.

Lorsque le véhicule automobile 1 est en mode de conduite autonome, on peut envisager de diminuer le nombre de paramètres de conduite pour désactiver certaines alertes rétrovision afin de ne conserver que les alertes d'extrême urgence. En effet, le véhicule 1 est alors capable de rouler automatiquement sans l'intervention d'un conducteur. Le choix de l'activation ou non des alertes rétrovision peut être laissé au conducteur.

La surveillance d'au moins un paramètre de conduite du véhicule automobile 1 permet de limiter l'augmentation de la charge visuelle du conducteur aux situations de conduite nécessitant leur utilisation, c'est-à-dire lorsque l'utilisateur a besoin de visualiser l'environnement du véhicule 1, l'intensité d'éclairage des rétroviseurs écrans 3a, 3b étant atténuée la majeure partie du temps. On évite ainsi la fatigue visuelle du conducteur grâce à la modulation de l'intensité d'affichage, celle-ci pouvant être déclenchée de manière passive, sans intervention volontaire du conducteur. Cette optimisation de l'éclairage des rétroviseurs écrans 3a, 3b permet par ailleurs de réduire la consommation d'énergie et d'augmenter la durée de vie des écrans qui sont moins sollicités.

## Revendications

1. Procédé de gestion de l'affichage d'au moins un rétroviseur écran (3a, 3b) d'un véhicule automobile (100), comprenant que
- on surveille au moins un paramètre de conduite du véhicule automobile (101), et **caractérisé en ce que**
- on augmente l'intensité d'affichage d'au moins un rétroviseur écran (3a, 3b) dans un mode d'éclairage fort, en relation avec l'évolution du paramètre de conduite, pendant que avant et après l'activation du mode d'éclairage fort l'intensité d'affichage du rétroviseur écran (3a, 3b) est réduite à un niveau bas dans un mode d'éclairage atténué.

2. Procédé de gestion selon la revendication précédente, **caractérisé en ce qu'**un paramètre de conduite surveillé est l'utilisation d'un frein du véhicule automobile (1), le mode d'éclairage fort étant activé par détection d'un contact ou de l'actionnement de la pédale de frein du véhicule automobile (1).

3. Procédé de gestion selon l'une des revendications précédentes, **caractérisé en ce qu'**un paramètre de conduite surveillé est l'allure du véhicule automobile (1), le mode d'éclairage fort étant activé lorsque la décélération du véhicule automobile (1) franchit un premier seuil de décélération prédéterminé.

4. Procédé de gestion selon l'une des revendications précédentes, **caractérisé en ce qu'**un paramètre de conduite surveillé est l'utilisation de la marche arrière du véhicule automobile (1), le mode d'éclairage fort étant activé par détection de l'enclenchement de la marche arrière.

5. Procédé de gestion selon l'une des revendications précédentes, **caractérisé en ce qu'**un paramètre de conduite surveillé est la présence d'un objet ou d'une personne dans le champ de détection d'au moins un radar ou capteur ultrason (9, 10) du véhicule automobile (1), ledit mode d'éclairage fort étant activé lorsqu'un objet ou une personne est détecté dans ledit champ de détection.

6. Procédé de gestion selon la revendication précédente, **caractérisé en ce qu'**un paramètre de conduite surveillé est la présence d'un objet ou d'une personne dans un angle mort du véhicule automobile (1), ledit mode d'éclairage fort étant activé lorsqu'un objet ou une personne est détecté dans un angle mort.

7. Procédé de gestion selon l'une des revendications précédentes, **caractérisé en ce qu'**un paramètre de conduite surveillé est l'émission d'un signal alerte anticollision par un système anticollision du véhicule automobile (1), ledit mode d'éclairage fort étant activé lorsqu'un signal alerte anticollision est émis.

8. Procédé de gestion selon l'une des revendications précédentes, **caractérisé en ce qu'**un paramètre de conduite surveillé est l'orientation de la tête du conducteur, ledit mode d'éclairage fort étant activé lorsqu'on détecte que le conducteur a tourné la tête sur un côté pendant une durée supérieure à une durée prédéterminée.

9. Procédé de gestion selon l'une des revendications précédentes, **caractérisé en ce qu'**un paramètre de conduite surveillé est l'utilisation des clignotants (12) du véhicule automobile (1), ledit mode d'éclairage fort étant activé lorsqu'un clignotant (12) est actionné.

10. Procédé de gestion selon l'une des revendications précédentes, **caractérisé en ce qu'**un paramètre de conduite surveillé est le franchissement d'une ligne de marquage au sol (13), ledit mode d'éclairage fort étant activé lorsqu'un capteur (15) du véhicule automobile (1) détecte le franchissement d'une ligne de marquage au sol (13).

11. Procédé de gestion selon l'une des revendications 5 à 10, **caractérisé en ce qu'**en mode d'éclairage fort, seule l'intensité d'affichage du rétroviseur écran (3a, 3b) permettant de visualiser le côté vers lequel la tête du conducteur s'est orientée ou le côté indiqué par le clignotant (12) ou le côté de franchissement de la ligne de marquage au sol (13) ou le côté où un objet ou une personne est détecté, est augmenté.

12. Procédé de gestion selon l'une des revendications 1 à 10, **caractérisé en ce qu'**en mode d'éclairage fort, l'intensité d'affichage des deux rétroviseurs écrans (3a, 3b), est augmentée.

13. Procédé de gestion selon l'une des revendications précédentes, **caractérisé en ce qu'**on augmente l'intensité d'affichage d'au moins un rétroviseur écran (3a, 3b) à un premier niveau haut en mode d'éclairage fort, lorsque ledit paramètre de conduite franchit un premier seuil prédéterminé et on augmente l'intensité d'affichage du rétroviseur écran (3a, 3b) à un deuxième niveau haut supérieur au premier niveau haut en mode d'éclairage très fort, lorsque ledit paramètre de conduite franchit un deuxième seuil prédéterminé.

14. Procédé de gestion selon l'une des revendications précédentes, **caractérisé en ce que** le mode d'éclairage fort est activé au moins pendant une durée prédéterminée.

15. Procédé de gestion selon l'une des revendications précédentes, **caractérisé en ce qu'**on diminue le nombre de paramètres de conduite dont la surveillance est apte à augmenter l'intensité d'affichage d'au moins un rétroviseur écran (3a, 3b) lorsque le véhicule automobile (1) est en mode de conduite autonome.

## Patentansprüche

1. Verfahren zur Verwaltung der Anzeige mindestens eines Rückspiegelbildschirms (3a, 3b) eines Kraftfahrzeugs (100), umfassend, dass
- mindestens ein Fahrparameter des Kraftfahrzeugs (101) überwacht wird, und **dadurch gekennzeichnet, dass**
- die Anzeigeintensität mindestens eines Rückspiegelbildschirms (3a, 3b) in einem Modus starker Beleuchtung in Verbindung mit der Entwicklung des Fahrparameters erhöht wird, während vor und nach der Aktivierung des Modus starker Beleuchtung die Anzeigeintensität des Rückspiegelbildschirms (3a, 3b) auf ein niedriges Niveau in einem Modus gedämpfter Beleuchtung verringert wird.

2. Verwaltungsverfahren nach dem vorhergehenden Anspruch, **dadurch gekennzeichnet, dass** ein überwachter Fahrparameter die Nutzung einer Bremse des Kraftfahrzeugs (1) ist, wobei der Modus starker Beleuchtung durch Detektion eines Kontakts oder der Betätigung des Bremspedals des Kraftfahrzeugs (1) aktiviert wird.

3. Verwaltungsverfahren nach einem der vorhergehenden Ansprüche, **dadurch gekennzeichnet, dass** ein überwachter Fahrparameter die Geschwindigkeit des Kraftfahrzeugs (1) ist, wobei der Modus starker Beleuchtung aktiviert wird, wenn die Verzögerung des Kraftfahrzeugs (1) eine erste vorbestimmte Verzögerungsschwelle überschreitet.

4. Verwaltungsverfahren nach einem der vorhergehenden Ansprüche, **dadurch gekennzeichnet, dass** ein überwachter Fahrparameter die Nutzung des Rückwärtsgangs des Kraftfahrzeugs (1) ist, wobei der Modus starker Beleuchtung durch Detektion des Einlegens des Rückwärtsgangs aktiviert wird.

5. Verwaltungsverfahren nach einem der vorhergehenden Ansprüche, **dadurch gekennzeichnet, dass** ein überwachter Fahrparameter das Vorhandensein eines Gegenstands oder einer Person im Detektionsfeld mindestens eines Radars oder Ultraschallsensors (9, 10) des Kraftfahrzeugs (1) ist, wobei der Modus starker Beleuchtung aktiviert wird, wenn ein Gegenstand oder eine Person im Detektionsfeld detektiert wird.

6. Verwaltungsverfahren nach dem vorhergehenden Anspruch, **dadurch gekennzeichnet, dass** ein überwachter Fahrparameter das Vorhandensein eines Gegenstands oder einer Person in einem toten Winkel des Kraftfahrzeugs (1) ist, wobei der Modus starker Beleuchtung aktiviert wird, wenn ein Gegenstand oder eine Person in einem toten Winkel detektiert wird.

7. Verwaltungsverfahren nach einem der vorhergehenden Ansprüche, **dadurch gekennzeichnet, dass** ein überwachter Fahrparameter die Abgabe eines Antikollisions-Warnsignals durch ein Antikollisionssystem des Kraftfahrzeugs (1) ist, wobei der Modus starker Beleuchtung aktiviert wird, wenn ein Antikollisions-Warnsignal abgegeben wird.

8. Verwaltungsverfahren nach einem der vorhergehenden Ansprüche, **dadurch gekennzeichnet, dass** ein überwachter Fahrparameter die Orientierung des Kopfes des Fahrers ist, wobei der Modus starker Beleuchtung aktiviert wird, wenn erkannt wird, dass der Fahrer den Kopf während einer Dauer, die länger als eine vorbestimmte Dauer ist, auf eine Seite gedreht hat.

9. Verwaltungsverfahren nach einem der vorhergehenden Ansprüche, **dadurch gekennzeichnet, dass** ein überwachter Fahrparameter die Nutzung der Blinker (12) des Kraftfahrzeugs (1) ist, wobei der Modus starker Beleuchtung aktiviert wird, wenn ein Blinker (12) betätigt wird.

10. Verwaltungsverfahren nach einem der vorhergehenden Ansprüche, **dadurch gekennzeichnet, dass** ein überwachter Fahrparameter die Überquerung einer Markierungslinie am Boden (13) ist, wobei der Modus starker Beleuchtung aktiviert wird, wenn ein Sensor (15) des Kraftfahrzeugs (1) die Überquerung einer Markierungslinie am Boden (13) detektiert.

11. Verwaltungsverfahren nach einem der Ansprüche 5 bis 10, **dadurch gekennzeichnet, dass** im Modus starker Beleuchtung nur die Anzeigeintensität des Rückspiegelbildschirms (3a, 3b), mit dessen Hilfe die Seite gezeigt werden kann, zu welcher der Kopf des Fahrers orientiert ist, oder die Seite, die vom Blinker (12) angezeigt wird, oder die Seite der Überquerung der Markierungslinie am Boden (13) oder die Seite, wo ein Gegenstand oder eine Person detektiert wird, erhöht wird.

12. Verwaltungsverfahren nach einem der Ansprüche 1 bis 10, **dadurch gekennzeichnet, dass** im Modus starker Beleuchtung die Anzeigeintensität der zwei Rückspiegelbildschirme (3a, 3b) erhöht wird.

13. Verwaltungsverfahren nach einem der vorhergehenden Ansprüche, **dadurch gekennzeichnet, dass** die Anzeigeintensität mindestens eines Rückspiegelbildschirms (3a, 3b) auf ein erstes hohes Niveau im Modus starker Beleuchtung erhöht wird, wenn der Fahrparameter eine erste vorbestimmte Schwelle überschreitet, und die Anzeigeintensität des Rückspiegelbildschirms (3a, 3b) auf ein zweites hohes Niveau, das höher als das erste hohe Niveau ist, im Modus sehr starker Beleuchtung erhöht wird, wenn der Fahrparameter eine zweite vorbestimmte Schwelle überschreitet.

14. Verwaltungsverfahren nach einem der vorhergehenden Ansprüche, **dadurch gekennzeichnet, dass** der Modus starker Beleuchtung wenigstens während einer vorbestimmten Dauer aktiviert ist.

15. Verwaltungsverfahren nach einem der vorhergehenden Ansprüche, **dadurch gekennzeichnet, dass** die Anzahl von Fahrparametern, deren Überwachung geeignet ist, die Anzeigeintensität mindestens eines Rückspiegelbildschirms (3a, 3b) zu erhöhen, verringert wird, wenn sich das Kraftfahrzeug (1) im Selbstfahrmodus befindet.

## Claims

1. Method for managing the display of at least one rear-view screen (3a, 3b) of a motor vehicle (100), wherein
- at least one driving parameter of the motor vehicle (101) is monitored, **characterized in that**
- the display intensity of at least one rear-view screen (3a, 3b) is augmented to a strong lighting mode, in relation to the trending of the driving parameter, while during and after the activation of the strong lighting mode, the display intensity of the rear-view screen (3a, 3b) is reduced to a low level in an attenuated lighting mode.

2. Management method according to the preceding claim, **characterized in that** one driving parameter that is monitored is the use of a brake of the motor vehicle (1), the strong lighting mode being activated by detection of a contact on or of the actuation of the brake pedal of the motor vehicle (1).

3. Management method according to either of the preceding claims, **characterized in that** one driving parameter that is monitored is the speed of the motor vehicle (1), the strong lighting mode being activated when the deceleration of the motor vehicle (1) crosses a first predetermined deceleration threshold.

4. Management method according to one of the preceding claims, **characterized in that** one driving parameter that is monitored is the use of the reversing of the motor vehicle (1), the strong lighting mode being activated by detection of the initiation of reversing.

5. Management method according to one of the preceding claims, **characterized in that** one driving parameter that is monitored is the presence of an object or of a person within the detection field of at least one radar or ultrasound sensor (9, 10) of the motor vehicle (1), said strong lighting mode being activated when an object or a person is detected in the said detection field.

6. Management method according to the preceding claim, **characterized in that** one driving parameter that is monitored is the presence of an object or of a person in a blind spot of the motor vehicle (1), said strong lighting mode being activated when an object or a person is detected in a blind spot.

7. Management method according to one of the preceding claims, **characterized in that** one driving parameter that is monitored is the emission of an anticollision alert signal by an anticollision system of the motor vehicle (1), said strong lighting mode being activated when an anticollision alert signal is emitted.

8. Management method according to one of the preceding claims, **characterized in that** one driving parameter that is monitored is the orientation of the head of the driver, said strong lighting mode being activated when it is detected that the driver's head has been turned to one side for a duration greater than a predetermined duration.

9. Management method according to one of the preceding claims, **characterized in that** one driving parameter that is monitored is the use of the indicators (12) of the motor vehicle (1), said strong lighting mode being activated when an indicator (12) is actuated.

10. Management method according to one of the preceding claims, **characterized in that** one driving parameter that is monitored is the crossing of a ground marking line (13), said strong lighting mode being activated when a sensor (15) of the motor vehicle (1) detects the crossing of a ground marking line (13) .

11. Management method according to one of Claims 5 to 10, **characterized in that**, in strong lighting mode, only the display intensity of the rear-view screen (3a, 3b) making it possible to view the side to which the driver's head is oriented or the side indicated by the indicator (12) or the side on which the ground marking line (13) is crossed or the side where an object or a person is detected, is augmented.

12. Management method according to one of Claims 1 to 10, **characterized in that**, in strong lighting mode, the display intensity of the two rear-view screens (3a, 3b), is augmented.

13. Management method according to one of the preceding claims, **characterized in that** the display intensity of at least one rear-view screen (3a, 3b) is augmented to a first high level in strong lighting mode, when said driving parameter crosses a first predetermined threshold and the display intensity of the rear-view screen (3a, 3b) is augmented to a second high level higher than the first high level in very strong lighting mode, when said driving parameter crosses a second predetermined threshold.

14. Management method according to one of the preceding claims, **characterized in that** the strong lighting mode is activated at least for a predetermined duration.

15. Management method according to one of the preceding claims, **characterized in that** the number of driving parameters for which the monitoring can augment the display intensity of at least one rear-view screen (3a, 3b) is decreased when the motor vehicle (1) is in autonomous driving mode.
